# EUROPEAN PATENT SPECIFICATION

(11) **EP 1 029 190 B1**
(45) Date of publication and mention of the grant of the patent: **30.06.2004**
(21) Application number: 97936623.4
(22) Date of filing: 28.08.1997
(51) Int. Cl.: F16K 31/524

(54) **AN ACTUATOR FOR A MULTIVALVE GAS BURNER**
BETÄTIGUNGSVORRICHTUNG FÜR MEHRVENTILGASBRENNER
COMMANDE POUR BRULEUR A GAZ A ROBINETS MULTIPLES

(43) Date of publication of application: 23.08.2000
(73) Proprietor: AKTIEBOLAGET ELECTROLUX, 105 45 Stockholm (SE)
(72) Inventor: ESKILDSEN, Christian, DK-5591 Gelsted (DK); ARMANNI, Piero, I-47100 Forli (IT)
(74) Representative: Svahn, Göran
(86) International application number: PCT/DK1997/000352
(87) International publication number: WO 1999/011956

(56) References cited:
- FR-A1- 1 595 039
- GB-A- 2 230 595
- US-A- 4 785 680

## Description

The invention relates to an arrangement according to preamble of claim 1 for control of the supply of gas to a burner comprising a plurality of burner sections.

Traditionally, the various open gas burners on a gas hob were supplied via a valve which controlled the volume of gas entering each burner per time unit. In more recent burners a concentric disposition of circular gas ring burners are individually supplied with gas/air mixture under the control of valves. The consumer desires simple, logical adjustments in order to control the production of heat and would not tolerate complex manipulations of several valves in order to light the said ring burners in sequence. One solution to this has been shown in GB 22 30 595 in which a linear disposition of orifices in a gas supply chamber has a number of gas lines leading to each ring burner, a nozzle or injector being fitted in each gas line. The orifices are opened in sequence by a cylinder fitted with a series cams acting on springs disposed in the chamber, which cylinder is rotated from a position where no cam is engaging a spring for an orifice (hob off) through various positions with increasing numbers of cams engaging springs. The cylinder is fitted in parallel to the front edge of the hob and the rotary motion is transferred from the front of the hob via conical cogwheels. All the valves are orifices in a common chamber within which the cylinder is disposed. This functions well, however a volume of gas which is large in relation to the volume in the gas pipe supplying it is constantly present in the chamber and the shaft of the cylindrical actuator has to pass through a high-precision gasket in the wall of the chamber. Furthermore, the traditional control device for a gas valve, a rotating knob, does not give a very precise indication of the heat to be generated.

It is a purpose of the invention to provide an intuitively more precise indication of the heat production of a gas burner and at the same time to enable the use of standard valve components and reducing the volume taken up by the valve mechanism. This is obtained in an arrangement according to the invention which is characterized in that the valves are arranged in a row and that each of the valves is associated with a cam follower cooperating with a cam surface of a linear sliding cam arranged to move with a slider operatively connected with a knob-like handle, wherein during the sliding movement in a first direction the valves are sequentially opened. The volume occupied by the valves is much smaller then in the prior art and the slider or lever handle gives a very clear indication of the adjustment made. Furthermore, the valves have an axial travel which enables the use of simpler gasket design or even a bellows design.

In an embodiment of the invention the cam surface of the sliding cam is arranged to cause an equal movement of all of the plurality of valves when cooperating with the cam follower of the respective valve. This means that the resistance felt to the movement of the knob will be the same for each new valve engaged, but equally that variation of each valve opening will only occur in a very short stretch of the path of the knob. The valves will essentially have an on-off function. This is a particular advantage when the user shall only have a limited choice of positions.

In a further embodiment of the invention the cam surface of the sliding cam is arranged to cause a gradually increased movement of the valves during the sliding movement when cooperating with the cam follower of the respective valve. This solution will be used when the power output of the gas burner is not only controlled by the number of active ring burners but also by the power output of each ring burner. This creates a heat distribution which, dependent on circumstances, may be more suitable.

A particularly useful user interaction with the burner is obtained when the opereating knob is placed alongside an edge of the hotplate into which the burner is fitted. This enables a clear graphical indication of the output of the burner in question.

The invention will be described in grater detail with reference to the drawing, in which
Fig. 1 shows a top view of a corner of a cooktop with a burner and an actuator according to the invention,
Fig. 2 shows a vertical section of the same burner and actuator, along the direction A,
Fig. 3 shows a side view in the direction B, and
Fig. 4 shows an enlargement cf the valve manifold shown in Fig. 3.

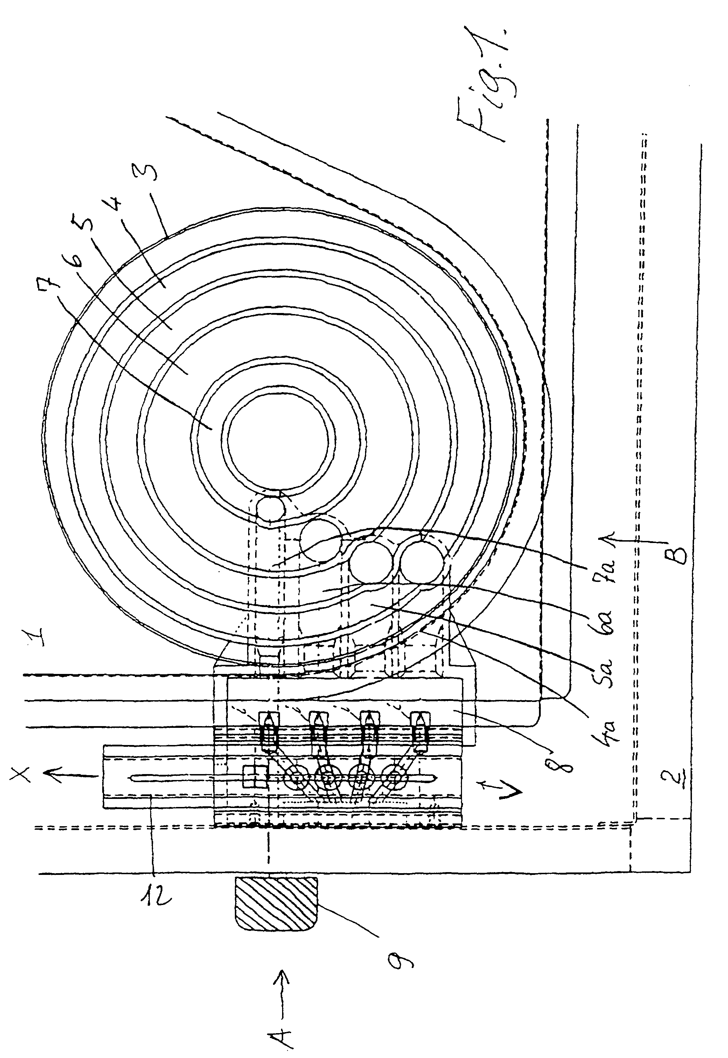

In Fig. 1 is shown the left corner of a cooktop 1 nearest to a consumer. The practical construction would have a glass or glass ceramic plate covering the whole cooktop and extending to the edge of the frame 2. The burner 3 is composed of individually supplied rings 4, 5, 6, and 7. Each ring is supplied with air/gas mixture by means of conduits 4a, 5a, 6a, 7a connected to a joint source for primary air 8, in to which nozzles or injectors i for gas are individually directed. The supply of gas to the injectors i occurs via valves V which are actuated by means of a slider having a control knob 9.

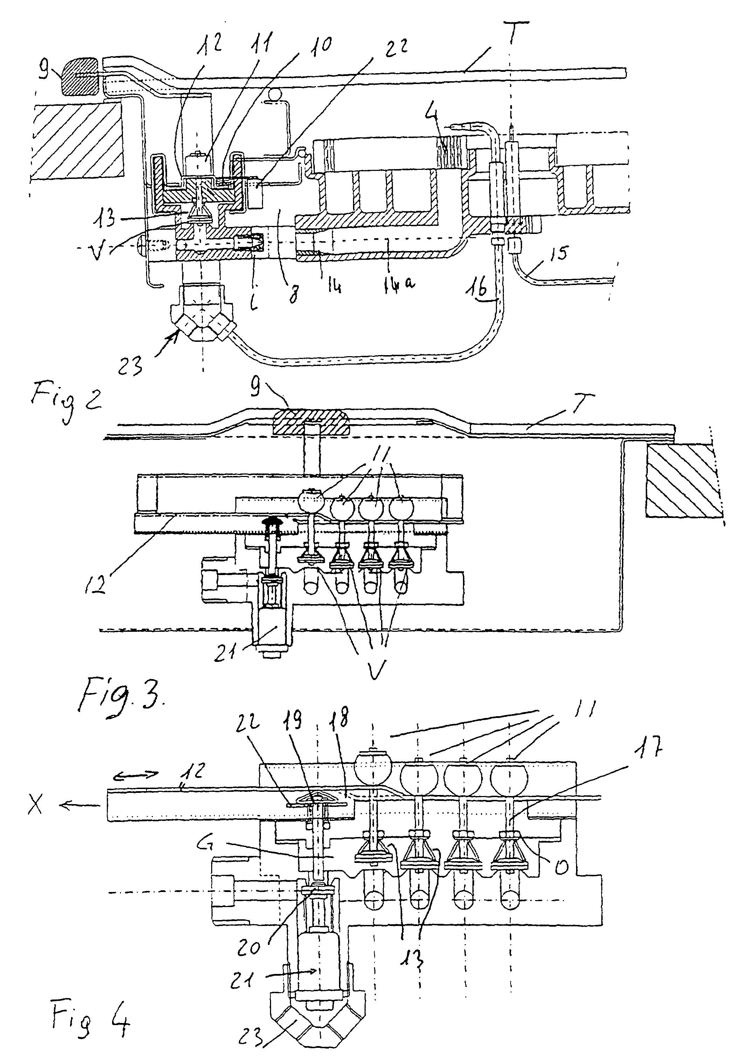

Fig. 2 shows a section through the valve and gas conduit arrangement. As described above, the whole arrangement is covered by a top plate T. The control knob 9 is connected to a slider 10 which moves in a direction perpendicular to the plane of the drawing. A cam follower 11 with a rounded lower surface is in touch with a cam part 12 on the slider in order that a valve V may be imparted a vertical movement against the return force of a spring 13. When the valve V is opened, gas is admitted to the injector or nozzle i which draws air from the source of primary air 8 into the venturi 14 so that a combustible air/gas mixture may be fed via the conduit 4a to the burner ring 4. The mixture will be ignited by means of a spark plug 15 or a similar device, and a proper burning condition is monitored by means of a device 16 which in turn may turn off the supply of gas in case it does not burn.

Fig. 3 shows the series of valves V actuated by the cam 12 which consists of two levels joined by a sloping surface. The cam followers 11 are formed with a suitable radius of curvature, being essentially cylindrical.

The arrangement is shown in greater detail in Fig. 4, where it will be seen that the two levels of the cam 12 is obtained by sliding it sideways, thereby lifting the valves V against the return force of the springs 13. The arrangement of the linear cam ensures that the valves are operated in sequence such that movement of the cam to the right in the drawing will open more and more valves. The valves operate in a very small volume G which is connected to the gas supply, and each valve stem is made gas tight by means of an o-ring member O surrounding the operating rod (17).

The valve is supplied with a safety system which blocks the flow of gas when the thermocouple 16 is not heated by the flame of the burner. In order to light the burner, the cam 12 must move in the direction indicated "x" in order that the slope 18 acts on the rod 19 and opens the disc valve 20, moving the yoke in contact with the electromagnet 21 whereby gas may pass. During the movement the cam 12 actuates the microswitch 22 which acts to operate the igniter (not shown in the drawing) which supplies a high voltage to the electrode 15 which lights the burner and simultaneously supplies a voltage cf 50 mV (23) in order to maintain a holding current in the electromagnet 21 for a time sufficient to obtain ignition of the burner and to heat the thermocouple 16 which continues to supply the holding current for the electromagnet 21. In case a flame is not detected at the burner, the thermocouple 15 is cooled and no longer supplies a holding current to the electromagnet 21 which closes the gas valve when it is no longer energised.

## Claims

1. Arrangement for control of the supply of gas to a burner (3) comprising a plurality of burner sections (4, 5, 6, 7), said arrangement comprising a plurality of valves (V) arranged in a common manifold (G), wherein each section (4, 5, 6, 7) is supplied via a separate one of said plurality of valves (V), **characterized in that** the valves (V) are arranged in a row and that each of the valves is associated with a cam follower (11) cooperating with a cam surface of a linear sliding cam (12) arranged to move with a slider (10) operatively connected with a knob-like handle (9), wherein during the sliding movement in a first direction the valves (V) are sequentially opened.

2. Arrangement according to claim 1, **characterized in that** the cam surface of the sliding cam (12) is arranged to cause an equal movement of all of the plurality of valves (V) when cooperating with the cam follower (11 ) of the respective valve (V).

3. Arrangement according to claim 1, **characterized in that** the cam surface of the sliding cam (12) is arranged to cause a gradually increased movement of the valves (V) during the sliding movement when cooperating with the cam follower (11) of the respective valve (V).

4. Arrangement according to claim 1, **characterized in that** the knob-like handle (9) is disposed alongside an edge (2) of the hotplate into which the burner (3) is fitted.

## Patentansprüche

1. Anordnung zur Steuerung der Gaszufuhr zu einem eine Anzahl von Brennerbereichen (4, 5, 6, 7) umfassenden Brenner (3), wobei die genannte Anordnung eine Anzahl von in einem gemeinsamen Verteilerstück (G) angeordneten Ventilen (V) umfasst und jeder Bereich (4, 5, 6, 7) über ein jeweils separates Ventil der genannten Anzahl von Ventilen (V) versorgt wird, **dadurch gekennzeichnet, dass** diese Ventile (V) in einer Reihe angeordnet sind und dass jedes dieser Ventile mit einem Nockenstößel (11) verbunden ist, welcher mit einer Nockenfläche eines linearen Gleitnockens (12) zusammenwirkt, welcher dergestalt angeordnet ist, dass er sich mit einer Gleitvorrichtung (10) bewegt, welche funktionell mit einem knopfähnlichen Griff (9) verbunden ist, wobei während der Gleitbewegung in einer ersten Richtung die Ventile (V) zeitlich nacheinander geöffnet werden.

2. Anordnung gemäß Anspruch 1, **dadurch gekennzeichnet, dass** die Nockenfläche des Gleitnockens (12) dergestalt angeordnet ist, dass sie eine gleiche Bewegung sämtlicher Ventile der Anzahl von Ventilen (V) bewirkt, wenn diese mit dem Nockenstößel (11) des jeweiligen Ventils (V) zusammenwirkt.

3. Anordnung gemäß Anspruch 1, **dadurch gekennzeichnet, dass** die Nockenfläche des Gleitnockens (12) dergestalt angeordnet ist, dass sie während der Gleitbewegung eine allmählich zunehmende Bewegung der Ventile (V) bewirkt, wenn diese mit dem Nockenstößel (11) des jeweiligen Ventils (V) zusammenwirkt.

4. Anordnung gemäß Anspruch 1, **dadurch gekennzeichnet, dass** der knopfähnliche Griff (9) längs einer Kante (2) der Herdplatte, in welcher der Brenner (3) eingebaut ist, angeordnet ist.

## Revendications

1. Agencement pour commander l'alimentation de gaz vers un brûleur (3) comportant une pluralité de tronçons de brûleur (4, 5, 6, 7), ledit agencement comportant une pluralité de vannes (V) agencées dans un collecteur commun (G), chaque tronçon (4, 5, 6, 7) étant alimenté par une vanne séparée parmi ladite pluralité de vannes (V), **caractérisé en ce que** les vannes (V) sont agencées en un rang, et **en ce que** chacune des vannes est associée à un suiveur de came (11) coopérant avec une surface de came d'une came coulissante linéaire (12) agencée pour se déplacer avec un coulisseau (10) connecté de manière opérationnelle à une poignée analogue à un bouton (9), dans lequel pendant le mouvement de coulissement dans une première direction, les vannes (V) sont ouvertes séquentiellement.

2. Agencement selon la revendication 1, **caractérisé en ce que** la surface de came de la came coulissante (12) est agencée pour provoquer un mouvement égal de la totalité de la pluralité de vannes (V) en coopération avec le suiveur de came (11) de la vanne respective (V).

3. Agencement selon la revendication 1, **caractérisé en ce que** la surface de came de la came coulissante (12) est agencée pour provoquer un mouvement augmenté graduellement des vannes (V) pendant le mouvement coulissant lors d'une coopération avec le suiveur de came (11) de la vanne respective (V).

4. Agencement selon la revendication 1, **caractérisé en ce que** la poignée analogue à un bouton (9) est disposée le long d'un bord (2) de la plaque chaude dans laquelle le brûleur (3) est agencé.
